Europäisches Patentamt

European Patent Office

Office européen des brevets

(19)

(11) **EP 0 716 318 B1**

(12) **FASCICULE DE BREVET EUROPEEN**

(45) Date de publication et mention
de la délivrance du brevet:
**26.06.2002 Bulletin 2002/26**

(51) Int Cl.⁷: **G01S 13/90**

(21) Numéro de dépôt: **95402702.5**

(22) Date de dépôt: **30.11.1995**

(54) **Restitution de pointage en élévation, notamment pour radar à synthèse d'ouverture**

Wiederherstellung des Elevationsrichtens, insbesondere für Radar mit synthetischer Apertur

Elevation pointing restoration, particularly for synthetic aperture radar

(84) Etats contractants désignés:
**DE GB IT**

(30) Priorité: **05.12.1994 FR 9414581**

(43) Date de publication de la demande:
**12.06.1996 Bulletin 1996/24**

(73) Titulaire: **ALCATEL**
**75008 Paris (FR)**

(72) Inventeurs:
• **Rey, Laurent**
**F-31240 L'Union (FR)**

• **Suinot, Noel**
**F-31750 Escalquens (FR)**

(74) Mandataire: **Smith, Bradford Lee et al**
**COMPAGNIE FINANCIERE ALCATEL**
**Dépt. Propriété Industrielle**
**30, avenue Kléber**
**75116 Paris (FR)**

(56) Documents cités:
**EP-A- 0 239 022      US-A- 4 134 113**
**US-A- 4 387 373      US-A- 4 978 961**
**US-A- 5 184 137**

**Description**

Le domaine de l'invention est celui du radar à synthèse d'ouverture (connu de l'homme de l'art par l'acronyme SAR pour Synthetic Aperture Radar en anglais), et plus particulièrement celui de l'observation de la terre par satellite. L'invention sera avantageusement utilisée pour des missions de radar spatial à partir d'un satellite artificiel en orbite autour d'un corps celeste. Elle peut aussi trouver application à bord des aéronefs ou d'autres engins, tels des missiles, des hélicoptères ou des drones,... qui évoluent à proximité de la surface de la terre ou de tout autre corps céleste (planète, astéroïde, comète, nuages interstellaires, ... etc.). En particulier, l'invention sera avantageusement utilisée pour effectuer des observations haute résolution, avec fort coefficient de rétrodiffusion, de reflectivité radar du sol.

Il est connu de confier à des satellites circulant en orbite basse des missions de télédétection hyperfréquence par radar hyperfréquence. Le satellite défilant en orbite basse se déplace par rapport à un point fixe sur la surface de la terre, à l'opposé d'un satellite géostationnaire. Ce déplacement permet au satellite d'observation de survoler la terre, selon une direction déterminée par son orbite. Les mesures radar effectuées à des moments successifs, tout au long du trajet du satellite, permettent de dresser une cartographie des paramètres mesurés, en fonction de la position du satellite ou de tout autre engin servant de plate-forme pour le radar.

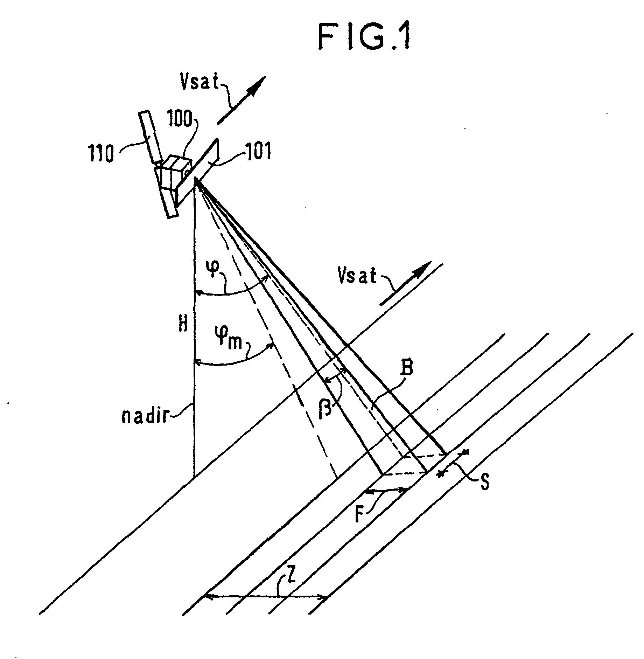

Un satellite de télédétection radar, connu de l'art antérieur, est montré schématiquement sur la figure 1.

Sur cette figure 1, un satellite 100 survole la terre à une hauteur H de quelques centaines de kms, avec une vitesse $\bar{V}_{sat}$ qui dépend des paramètres géométriques de l'orbite. Le satellite est muni des équipements nécessaires à sa mission, tels le panneau solaire 110 et l'antenne radar 101. Dans sa configuration la plus simple, un satellite de télédétection radar illumine, dans un plan d'illumination dit "transverse" contenant le nadir et perpendiculaire à la vitesse $\bar{V}_{sat}$, une fauchée F au sol lors de son passage, d'une largeur G. Par convention, les mesures selon une direction dans un premier plan contenant le nadir et perpendiculaire à la vitesse $\bar{V}_{sat}$, sont dites en élévation ; et celles selon une direction dans un deuxième plan perpendiculaire audit premier plan, et possédant un composante vectorielle parallèle à la vitesse $\bar{V}_{sat}$, sont dites en azimut.

Cette fauchée F est illuminée par des impulsions successives d'ondes hyperfréquence, dont les réflexions constituent le signal radar qui sera reçu par la même antenne 101 fonctionnant en réception, et interprété pour en extraire les données radiométiques voulues. Un traitement par le calcul de ces données permet de reconstruire une image en deux dimensions de l'aire au sol sondée par le radar, lors du passage du satellite.

Pour illuminer la fauchée F à l'intérieur d'une zone accessible Z, un faisceau B de divergence angulaire β est rayonné selon l'angle φ par rapport au nadir.

L'intersection de ce faisceau B avec le sol a une dimension F en largeur et une dimension S en longueur (selon la direction de la vitesse $\bar{V}_{sat}$). L'angle φ peut prendre des valeurs comprises entre φm et φM.

Lors du changement d'image à l'intérieur de la zone accessible Z. Lors du déplacement du satellite φ reste constant pour une image donnée dans le cas d'un mode SAR classique. Le faisceau B illumine chaque point du sol de la fauchée F à l'aide de I impulsions. Ces impulsions seront exploitées lors du traitement de synthèse d'ouverture, généralement effectué au sol. Des valeurs typiques des différents paramètres, pour les missions de télédétection déjà en vol, sont par exemple:

| H (km) | F (km) | φ (km) | S (km) | I | φM |
|--------|--------|--------|--------|------|------|
| 800 | 20 | 20° | 4 | 1000 | 55° |

Les mesures successives sont utilisées de façon cohérente par le calcul, c'est-à-dire avec une phase pour chaque mesure qui est une fonction du temps, de manière à prendre en compte le déplacement du satellite entre les mesures successives. Les mesures en azimut contiennent un composant Doppler, due à la vitesse du satellite dans le même plan que la visée du radar. Un radar de haute résolution en azimut effectuera un filtrage sur le décalage Doppler de la fréquence du radar, afin d'améliorer la cohérence de la sommation de signaux successifs.

Le document D1 = US 5 184 137 décrit un radar aéroporté à synthèse d'ouverture. Ce radar est protégé à bord de l'aéronef par un radome diélectrique fixé sur l'avant de l'appareil. Le diélectrique agit comme une lentille pour la radiation électromagnétique, avec dispersion de polarisation, et introduit des aberrations optiques qui ont pour conséquence des erreurs de pointage d'antenne. Pour pallier cette situation, D1 décrit une méthode d'étalonnage sur banc de test. Utilisant une pluralité de signaux de référence, le fonction de transfert du radome est mesuré pour différentes polarisations, différentes fréquences, et différents angles incidents, et ensuite représenté mathématiquement comme un tableau (ou matrice) de constants (ou coéfficients) qui multiplient le signal entrant, représenté comme un vecteur. A partir de ce tableau ou matrice qui représente la fonction de transfert du radome, l'inverse de la fonction de transfert du radome est ensuite calculé et stocké dans un mémoire embarqué, encore dans la forme d'un tableau de constants. Ces constants stockés seront appliqués par un calculateur embarqué sur tous les signaux entrants lors de l'opération du radar en vol, pour corriger systématiquement les erreurs (statiques) de pointage induits par le radome.

Ces erreurs statiques sont connues par l'étalonnage effectué au sol sur banc de test, et ne varient pas pendant la mission en vol, donc les constants ne varient pas non plus.

Le document EP-A-1-0 562 129 enseigne une méthode pour l'amélioration de la précision de pointage en azimut, en utilisant la forme connue du lobe azimut et sa relation avec le spectre azimut des données radar pour compenser les mouvements de la plate-forme.

On peut utiliser cette technique pour estimer en particulier le dépointage en azimut en mesurant le décalage Doppler moyen. La pente Doppler et le Doppler moyen sont les deux paramètres essentiels pour effectuer le traitement de synthèse d'ouverture qui utilise l'acquisition de plusieurs milliers d'impulsions successives modulées en amplitude par le lobe de l'antenne à -3db, soit une modulation sur le signal reçu de -6dB. On utilise alors la forme déterministe en parabole du lobe principal de rayonnement de l'antenne pour déterminer la position du maximum de ce lobe en analysant le spectre des échos reçus pour en déduire le dépointage éventuel en azimut à partir de la fréquence Doppler de ce maximum. La qualité de l'image finale sur l'axe azimut dépend donc de la précision d'estimation des paramètres Doppler pour effectuer les corrections de dépointage en azimut.

En revanche, le document EP-A-1-0 562 129 ne traite pas du tout d'un problème similaire qui se présente pour les mesures dans le sens de l'élévation, c'est-à-dire dans un plan d'illumination dit "transverse" contenant le nadir et perpendiculaire à la vitesse $\bar{V}_{sat}$.

D'autre part, il paraît qu'il n'y a aucun enseignement dans la littérature à ce sujet, tout au moins qui ne soit parvenu à la connaissance de la Demanderesse.

En effet, l'invention vise à restituer le pointage en élévation, dans un plan perpendiculaire au plan azimut. L'invention vise à améliorer ainsi la précision et la résolution radiométrique sur la fauchée. Puisque les mesures concernées sont dans un plan perpendiculaire à la vitesse $\bar{V}_{sat}$, il n'y a point de décalage Doppler.

D'autre part, puisque pour les besoins de mission, le lobe de l'antenne dans ce plan est le plus plat possible sur la fauchée pour obtenir une résolution radiométique constante et pour ne pas dégrader la précision radiométrique, on ne peut utiliser la forme du lobe élévation pour analyser le contraste au cours de la fauchée.

Finalement, alors que la cohérence du radar dans l'azimut est assuré par la sommation de plusieurs milliers d'impulsions avec des déphasages appropriés, l'analyse du signal et le calcul de dépointage en élévation se fera au cours de l'impulsion reçue, et ne pourra pas être extrait d'une sommation d'un grand nombre d'impulsions, comme cela est possible pour la restitution de pointage en azimut.

Le problème de pointage en élévation est important parce que les conséquences d'erreurs, mêmes petites, sur la qualité de mesures sont importantes. Des écarts dégradent la précision radiométique et donc diminuent le pouvoir de discrimination sur l'image, par exemple le contraste nécessaire pour distinguer les champs de blé, les forêts, .., ou pour construire une cartographie de la planète en termes de sa rugosité ou de sa teneur en eau. D'autre part, des erreurs de pointage dégradent sérieusement le bilan de liaison énoncé par l'équation radar. Même en maintenant le satellite à poste avec une précision de l'ordre de 0.1 degré, une perte de 1 dB est constatée sur le bilan de liaison, ce qui entraîne un surcoût de 25 kg en système de puissance (générateur solaire + batterie).

Les imprécisions de pointage en élévation peuvent provenir de plusieurs sources d'erreurs : la stabilité de la plate-forme au cours de l'orbite ; la stabilité thermique et mécanique de la structure porteuse de l'antenne ; et la stabilité thermique et mécanique de l'antenne elle-même. Tous ces paramètres sont d'autant plus sensibles lorsqu'on utilise un radar à antenne active vu la masse et les dimensions de celle-ci.

Après calcul du dépointage en élévation, il est également souhaitable de pouvoir appliquer une correction à la visée de l'antenne, en modifiant son dépointage radioélectrique via un système d'asservissement. La cadence de correction souhaitée peut être rapide, de l'ordre de cinq à dix fois par minute à bord du satellite, par exemple. Autrement, on peut effectuer une correction sur l'image au sol, à condition de fournir les données relatives au dépointage avec la transmission des données image.

Pour effectuer l'estimation et/ou la correction de dépointage en élévation, les systèmes classiques connus s'appuient sur l'utilisation de capteurs sur le satellite permettant de détecter un écart de position par rapport à l'horizon terrestre ou au géoide solaire ou à une constellation d'étoiles. Ces capteurs seront placés au plus près des éléments qui sont les plus sensibles à une variation d'attitude ou aux erreurs de dépointage.

Cette solution a plusieurs inconvénients. Si les capteurs doivent être sensibles non seulement aux variations d'attitude de la plate-forme, mais aussi aux déformations de l'antenne, ces capteurs doivent être distribués sur toute la surface de l'antenne. L'encombrement des capteurs devient significatif pour obtenir une bonne précision de pointage, et pour couvrir une antenne active de grande dimension, il en faut un certain nombre. D'autre part, quand un grand nombre de tels capteurs est placé sur une telle antenne active, le diagramme d'antenne peut en être modifié, et la masse et la structure de l'antenne doivent être modifiées pour accueillir ces capteurs, qui peuvent peser de l'ordre de quelques kilogrammes chacun pour la précision de pointage recherchée.

Si en revanche les capteurs sont placés sur la face arrière de l'antenne, le champ de vue de ceux-ci ne permet pas toujours de viser l'horizon terrestre ou le géoïde solaire. D'autre part, les déformations internes de la structure de l'antenne ne peuvent être détectées si ces capteurs sont montés sur la face arrière. De la même manière, si les capteurs sont montés sur la plate-forme elle même, ils ne peuvent donner la correction d'erreur résiduelle du positionnement relatif entre le centre de gravité de la plate-forme, et le centre de phase de l'antenne.

Un autre inconvénient majeur est que ce système de capteurs est pénalisant en masse et est onéreux. En effet, il faut quatre capteurs pour assurer la redondance et une couverture suffisante sur l'orbite, ce qui ajoute 40 kg environ à la masse de la charge utile du satellite, et qui introduit un surcoût de l'ordre de $ 5 Million US pour le système de capteurs sur le prix de l'antenne.

L'invention a pour but de pallier les inconvénients de l'art antérieur. A ces fins, l'invention propose une méthode de restitution de pointage d'antenne en élévation, notamment pour radar à synthèse d'ouverture monté sur une plate-forme mobile, ladite méthode comportant les opérations suivantes :

- .    générer un signal de référence à partir de la loi théorique d'illumination d'antenne calculée en élévation ;
- .    générer à partir de signaux reçus par l'antenne, un signal somme $\Sigma$ et un signal difference $\Delta$;
- .    numériser ces signaux $\Delta$, $\Sigma$, à l'aide d'une conversion analogique-numérique ;
- .    effectuer une compression d'impulsion reçue en distance, si l'impulsion émise était modulée en fréquence ;
- .    effectuer un sous-échantillonnage de la puissance de chaque signal somme $\Sigma$ et différence $\Delta$ à un pas en degrés inférieur à la précision voulue;
- .    calculer le rapport différence/somme théorique $(\Delta/\Sigma)_T$ à partir dudit signal de référence ;
- .    calculer le rapport différence/somme mesurée $(\Delta/\Sigma)_M$ à partir des signaux reçus, compressés, et sous-échantillonnés ;
- .    comparer le rapport $(\Delta/\Sigma)_M$ au rapport théorique $(\Delta/\Sigma)_T$ pour déterminer l'écart en degré et restituer ainsi le dépointage.

Selon une caractéristique, ledit signal différence $\Delta$ est généré à partir du signal reçu à l'antenne en modifiant la phase et/ou l'amplitude de la loi d'illumination afin de créer un contraste de signal important sur ledit signal différence $\Delta$.

Selon une variante, le signal différence $\Delta$ est généré à partir du signal reçu par l'antenne en inversant la phase du signal $(\pm\pi)$. sur une moitié de la hauteur de l'antenne.

Selon une autre variante, la différence $\Delta$ est obtenue par un coupleur du type T magique disposé avec ses deux entrées raccordées respectivement à une première moitié et à une deuxième moitié de la hauteur d'antenne, pour fournir la différence $\Delta$ sur une sortie dudit coupleur.

Avantageusement, la méthode selon l'invention comprend en outre les opérations suivantes :

- .    estimation de la puissance de bruit thermique de l'antenne;
- .    soustraction de cette estimation de bruit du signal bruité effectivement reçu.

Avantageusement, le niveau de puissance de bruit thermique peut être estimé en effectuant une acquisition au préalable de signal reçu sur le radar sans avoir effectué d'émission.

De préférence, la méthode comprend en outre une étape de mémorisation du signal reçu sur N impulsions afin d'améliorer le rapport signal/bruit des mesures effectuées.

Selon deux variantes, le traitement des données correspondants aux signaux somme et différence sous-échantillonnés s'effectue soit dans le domaine temporel, soit dans le domaine fréquentiel.

Selon une caractéristique avantageuse, à la suite de la restitution de pointage, une commande de correction de pointage d'antenne est générée et appliquée à l'antenne afin de corriger le pointage de celle-ci.

Selon une variante, à la suite de la restitution de pointage, l'écart en degré entre le pointage théorique et le pointage mesuré selon la méthode de l'invention est consigné avec le temps de la mesure, et transmis au sol avec les données radar afin de corriger les calculs de l'image.

L'invention propose également un dispositif de restitution de pointage en élévation d'antenne radar, ladite antenne comprenant une moitié dite haute et une moitié dite basse ; ledit dispositif comprenant des moyens pour effectuer la somme $\Sigma$ et la différence $\Delta$ des signaux reçus respectivement par ladite moitié haute et ladite moitié basse de ladite antenne ; des moyens de conversion analogique-numérique ADC1 ADC2 ; des moyens de compression d'impulsion, (COMP) ; des moyens de mesure de puissance P ; des moyens de rééchantillonnage (SAMP) de la puissance mesurée ; des moyens de consigne M1 d'une relation théorique du rapport $(\Delta/\Sigma)_T$ et le dépointage d'antenne en degré ; et des moyens de calcul $\mu P$ permettant d'effectuer la comparaison du rapport des signaux reçus $(\Delta/\Sigma)_M$ et théorique $(\Delta/\Sigma)_T$ afin de restituer le pointage en élévation de ladite antenne.

Selon une caractéristique , ledit dispositif comprend en outre des moyens de consigne M2 d'une estimation du bruit thermique $N_T$. Selon une réalisation avantageuse, ledit dispositif comprend des moyens pour mesurer la valeur de la puissance de bruit reçu par l'antenne en l'absence d'émission préalable, ainsi que des moyens permettant de consigner cette valeur dans ladite consigne M2.

Selon une variante, le dispositif comprend deux voies parallèles somme $\Sigma$ et différence $\Delta$ qui peuvent fonctionner simultanément.

Selon une autre variante, le dispositif comprend deux commutateurs SW1, SW2 permettant le traitement en alternance des signaux somme $\Sigma$ et différence $\Delta$.

Selon une réalisation préférée, le dispositif comprend en outre une mémoire permettant de stocker les données correspondant à un nombre N d'impulsions, et lesdits moyens de calcul $\mu$P peuvent moyenner lesdites données de ces N impulsions.

Selon une autre réalisation préférée, le dispositif comprend en outre des moyens ER permettant d'effectuer une correction de pointage de l'antenne à la suite de la restitution de pointage fournie par les moyens de calcul $\mu$P.

D'autres caractéristiques et avantages de l'invention ressortiront de la description détaillée qui suit ci-après de quelques exemples de réalisation, avec ses figures annexées dont :

- la figure 1, déjà décrite, montre schématiquement un satellite d'observation de la terre connu de l'art antérieur, avec un radar embarqué à synthèse d'ouverture en azimut et à pointage électronique en élévation et/ou en azimut sur la zone accessible ;
- la figure 2 montre schématiquement un exemple d'un satellite selon l'invention d'observation de la terre par radar embarqué à synthèse d'ouverture en azimut et à balayage en élévation;
- la figure 3 montre un exemple de la superposition d'une courbe théorique de $(\Delta/\Sigma)_T$ vs. angle de dépointage et d'une courbe mesurée et bruitée de $(\Delta/\Sigma)_M$ vs. angle de dépointage;
- la figure 4 montre schématiquement en organigramme un exemple d'un dispositif selon l'invention de restitution de pointage en élévation d'antenne radar;
- la figure 5 montre un exemple d'une courbe d'un diagramme de puissance P reçue en voie différence $\Delta$ en dB, en fonction de l'angle de dépointage $\delta\varphi$ en degré, par rapport à l'angle d'incidence moyen de $\varphi = 58°$;
- la figure 6 montre un exemple d'une courbe du rapport différence/somme $(\Delta/\Sigma)_T$ théorique en fonction du dépointage $\delta\varphi$ autour de l'angle de visée de l'antenne de $\varphi = 58°$;
- la figure 7 montre l'erreur angulaire ER $\Delta$ (°) de l'estimation de dépointage en fonction du nombre N d'impulsions pour différentes valeurs du rapport signal/bruit (S/B).

Sur toutes les figures, les mêmes repères se réfèrent aux mêmes éléments. L'échelle n'est pas toujours respectée pour des raisons de clarté des dessins. Les dessins montrent des exemples non limitatifs de quelques réalisations selon l'invention et ses principales variantes, ainsi que des résultats auxquels on peut s'attendre avec l'utilisation de la méthode de l'invention.

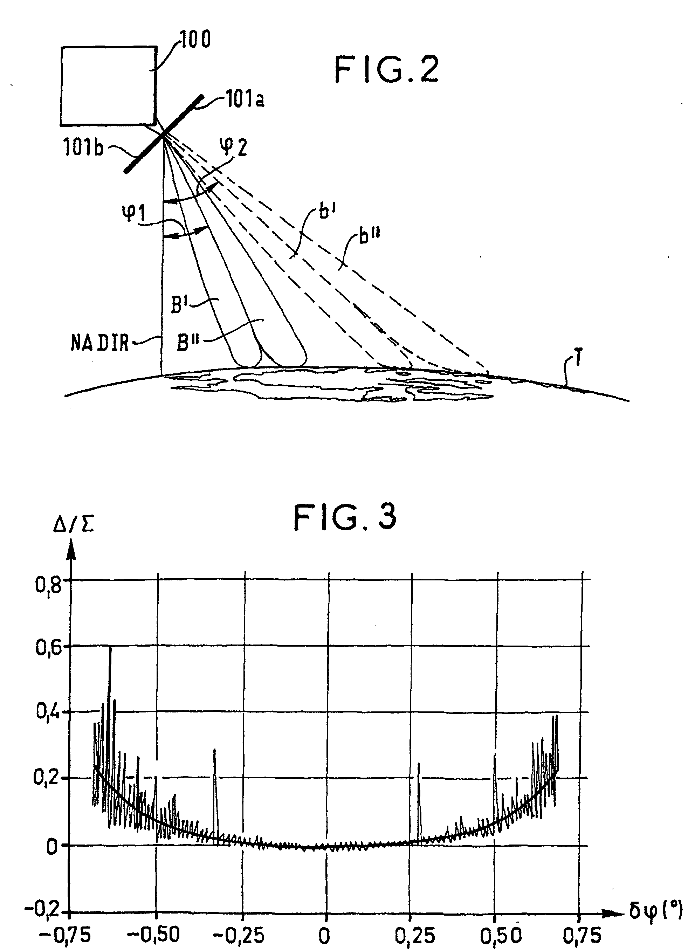

Sur la figure 2, on voit un exemple selon l'invention d'un satellite d'observation de la terre par radar embarqué à synthèse d'ouverture en azimut et à balayage en élévation, vu dans un plan perpendiculaire à l'orbite du satellite et à la vitesse $\overline{V}_{sat}$, montrant des lobes d'antenne dans la voie différence $\Delta$. Pour simplifier le dessin et la description correspondante, on ne considère qu'une fauchée sur un seul côté de la trajectoire.

Le satellite 100 comporte une antenne (101a, 101b) agencé pour effectuer un balayage en élévation, c'est-à-dire dans un plan d'illumination dit "transverse" contenant le nadir et perpendiculaire à la vitesse $\overline{V}_{sat}$, tel le plan de la figure 2. L'angle d'élévation, entre le NADIR et l'axe radioélectrique de l'antenne, est désigné par le symbole $\varphi$, dont deux valeurs particulières $\varphi1$ et $\varphi2$ sont portées sur le dessin.

Dans l'exemple de la figure 2, comme sur la plupart des antennes à balayage électronique, le balayage est obtenu par un déphasage relatif appliqué sur les différents éléments rayonnants d'une antenne réseau. Ce déphasage relatif, effectué selon une loi de phase déterminée par un calcul théorique, commande un dépointage du lobe principal de l'antenne par exemple selon l'angle $\varphi$. Cette loi de phase est déterminée cependant par rapport aux orientations présumées connues entre l'antenne 101a,101b, la plate-forme 100, et le Nadir. Mais selon l'hypothèse de l'invention, ces orientations relatives théoriques sont susceptibles d'être erronées, donnant lieu à des erreurs de pointage. Il est un but de l'invention de restituer le pointage réel en élévation, afin de pouvoir corriger ces erreurs.

Pour ce faire, la méthode de l'invention propose de faire une comparaison par le calcul des signaux théoriques et réels correspondant à un signal somme $\Sigma$ et un signal différence $\Delta$. Le signal somme $\Sigma$ correspond au signal reçu par tous les éléments rayonnants ayant un déphasage selon la loi de phase théorique pour un angle donné, par exemple $\varphi1$ ou $\varphi2$. Le signal différence $\Delta$ correspond au signal reçu par tous les éléments rayonnants ayant un déphasage selon cette même loi de phase théorique pour la partie supérieure 101a de l'antenne, et selon cette même loi de phase théorique +180° (ou $+\pi$) pour la partie inférieure 101b de l'antenne.

La figure 2 montre les lobes d'antenne correspondants aux signaux différence $\Delta$ pour les deux angles d'élévation $\varphi1$, $\varphi2$. On voit que contrairement au lobe habituel (voie somme $\Sigma$) montré sur la figure 1, qui est constitué d'un faisceau B d'ouverture angulaire $\beta$, le diagramme d'antenne du signal différence $\Delta$ comporte deux lobes principaux B', B" de rayonnement, avec un trou au milieu. C'est précisément ce diagramme en forme de deux lobes qui permet un positionnement très précis de l'axe de rayonnement selon l'angle d'élévation $\varphi1$. De la même manière, on voit que la voie différence Δ donne deux lobes principaux b',b" autour de l'axe de rayonnement selon l'angle d'élévation φ2.

Pour effectuer la comparaison des signaux théoriques et réellement reçus, l'invention préconise la génération par le calcul d'un signal de référence à partir de la loi théorique d'illumination d'antenne. Ce signal de référence aura lui aussi des composants somme Σ et différence Δ, à partir desquels on effectue le calcul du rapport théorique $(\Delta/\Sigma)_T$. On effectue le même calcul du rapport des signaux reçus sur les voies somme Σ et différence Δ avec les signaux effectivement reçus sur l'antenne 100 (110a, 100b) pour en extraire le rapport mesure $(\Delta/\Sigma)_M$.

La figure 3 montre un exemple de la comparaison de $(\Delta/\Sigma)_T$ et $(\Delta/\Sigma)_M$, par superposition des deux courbes relevées en fonction de l'écart δφ de l'angle de pointage en élévation autour de l'angle nominal φ choisi pour la prise de vue. La courbe théorique $(\Delta/\Sigma)_T$ est bien lisse, tandis que la courbe mesurée $(\Delta/\Sigma)_M$ est bruitée et comporte des pics d'intensité aléatoires. Dans la pratique, ces deux courbes ne se superpose pas parfaitement, à cause d'une erreur de pointage d'antenne qui peut être détectée sur ce diagramme par un écart angulaire entre les deux courbes. La méthode selon l'invention prévoit de glisser les deux courbes en abscisse par le calcul, jusqu'à obtenir la meilleure correspondance entre les deux, par exemple par un calcul des moindres carrés moyens. L'angle par lequel on glisse les courbes relativement l'une par rapport à l'autre correspond donc à l'erreur de pointage entre l'angle théorique et l'angle effectif de rayonnement, et peut être utilisé soit pour corriger l'orientation de l'antenne en agissant sur les déphaseurs de l'antenne, soit pour corriger les données image au moment du calcul d'image après compression distance et synthèse d'ouverture en azimut à partir des données brutes.

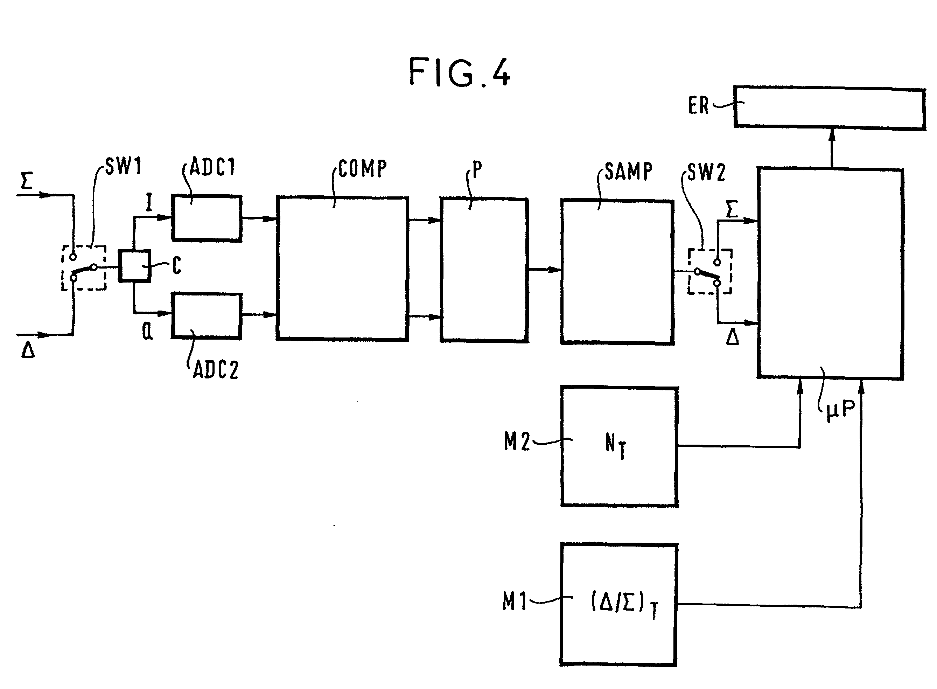

La figure 4 montre schématiquement en organigramme un exemple d'un dispositif selon l'invention de restitution de pointage en élévation d'antenne radar.

Les éléments rayonnants de l'antenne, ainsi que leurs alimentations et leurs déphaseurs ne sont pas montrés sur la figure. Les signaux somme Σ et différence Δ sont élaborés comme indiqué ci-dessus à partir des signaux reçus sur la partie supérieure 101a et la partie inférieure 101b de l'antenne 101, et sont acheminés sur les entrées Σ et Δ comme montré sur cette figure 4.

Dans l'exemple de réalisation de la figure 4, des commutateurs SW1, SW2 permettent de sélectionner la voie somme Σ ou la voie différence Δ en alternance pour effectuer le traitement dont la description suivra. Dans une autre réalisation non-montrée, des voies parallèles pour les signaux somme Σ et différence Δ permettent d'effectuer le traitement sur les deux voies simultanément, sans commutation.

Le premier commutateur SW1 va donc sélectionner l'entrée correspondant à la voie somme Σ ou à la voie différence Δ pour le traitement. Le signal ainsi sélectionné est appliqué à l'entrée d'un coupleur hybride C, qui fournit à ses deux sorties, de manière classique, des signaux correspondant aux signaux en phase I et en quadrature Q. Ces signaux I et Q sont ensuite numérisés à l'aide des convertisseurs analogique-numérique ADC1, ADC2.

Dans l'exemple montré, ces signaux numérisés sont ensuite acheminés vers une première unité de calcul COMP afin d'effectuer la compression d'impulsion par exemple par des transformés de Fourrier. De manière classique, les impulsions d'un radar à synthèse d'ouverture embarqué sur plate-forme spatiale, sont généralement modulées en étalement de spectre ou "chirp", c'est-à-dire que la fréquence de l'émission varie avec le temps pendant la durée de l'impulsion. Dans ce cas, le dispositif de l'invention effectuera la compression des impulsions reçues afin de restituer les données radar concernant la distance de la cible.

Apres compression dans l'unité COMP (uniquement dans le cas d'une émission modulée), les signaux en phase I et en quadrature Q sont fournis à une unité de mesure de puissance signal, qui effectuera le calcul de la puissance reçue selon la formule $I^2 + Q^2$. La valeur instantanée de puissance ainsi calculée sera échantillonnée par un dispositif d'échantillonnage SAMP, fonctionnant en sous-échantillonnage à un pas en degré proportionnel à la précision voulue, par exemple de l'ordre de $0.001°$ pour une précision de $0.01°$. Cette contrainte devra être adaptée suivant la fréquence d'échantillonnage et donc corrigée suivant l'incidence de manière à avoir un pas $\leq 0.001°$. La valeur de la puissance ainsi échantillonnée est ensuite fournie à l'entrée correspondante à la somme Σ ou à la différence Δ du microprocesseur μP, l'entrée appropriée étant sélectionnée à l'aide du deuxième commutateur SW2 en fonction de la position du premier commutateur SW1.

Ce microprocesseur μP à deux autres entrées pour accepter des valeurs de consigne stockées dans deux mémoires M1 et M2. La première mémoire M1 fournit une courbe théorique du rapport du signal différence Δ et le signal somme Σ: $(\Delta/\Sigma)_T$. Dans la réalisation de la figure 4, une deuxième mémoire M2 fournit une estimation de la puissance de bruit thermique $N_T$, afin de permettre la soustraction du signal bruité effectivement reçu avant d'effectuer les calculs du microprocesseur μP. La valeur de bruit thermique $N_T$ consignée dans la deuxième mémoire M2 peut provenir d'une mesure effectuée par l'antenne en l'absence d'émission, par exemple.

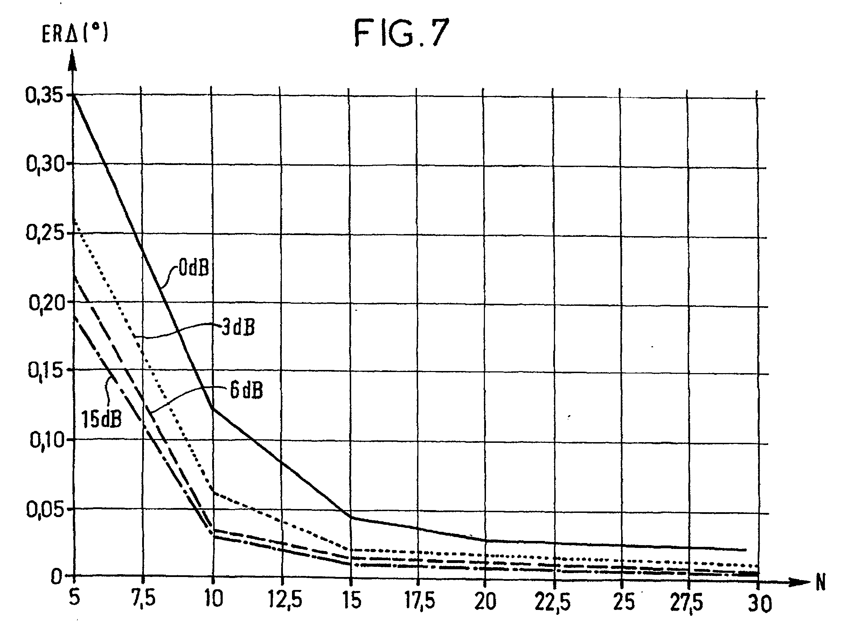

De préférence, le signal reçu sera échantillonné sur N impulsions, de manière à permettre le moyennage du bruit de speckle et du bruit thermique $N_T$, et ainsi, d'améliorer le rapport signal sur bruit, tel que montré sur la figure 7.

Le microprocesseur μP va donc effectuer les calculs énumérés ci-dessus, pour extraire deux courbes qui représentent respectivement le rapport de différence Δ sur somme Σ théorique $(\Delta/\Sigma)_T$ et effectivement reçu et mesuré $(\Delta/\Sigma)_M$, de préférence après soustraction de bruit thermique et moyennage sur N impulsions. Ensuite la comparaison de ces deux courbes permet de restituer l'erreur de pointage, qui peut commander une correction de pointage d'antenne via l'unité de commande de correction d'erreur ER.

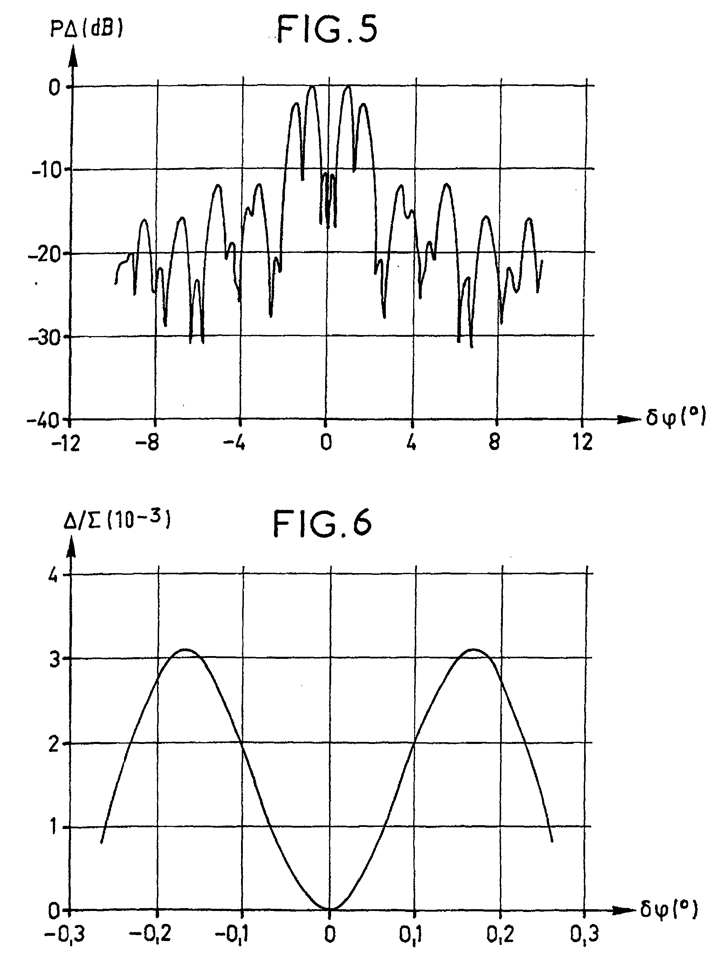

La figure 5 montre un exemple d'une courbe d'un diagramme de puissance P (en dB) reçue en voie différence $\Delta$, en fonction de l'angle de dépointage $\delta\varphi$ (en degré), par rapport à l'angle d'incidence moyen de $\varphi = 58°$. On remarque que les lobes principaux sont disposés de façon symétrique autour de l'angle moyen de $\varphi = 58°$, avec un "trou" de -10 dB au milieu. Les lobes secondaires sont de -12 à -16 dB.

La figure 6 montre un exemple d'une courbe du rapport différence/somme $(\Delta/\Sigma)_T$ théorique en fonction du dépointage $\delta\varphi$ autour de l'angle de visée de l'antenne de $\varphi = 58°$. Cette courbe présente une forme qui se prête aux comparaisons décrites ci-dessus : très symétrique, elle présente une variation d'une forte dynamique autour de la valeur de pointage théorique, ce qui facilite sa corrélation avec la courbe bruitée provenant de l'antenne ; et ce qui permet une bonne précision de mesure de l'écart angulaire entre pointage réel et théorique.

La figure 7 montre l'erreur angulaire $ER\Delta(°)$ de l'estimation de dépointage en fonction du nombre N d'impulsions pour différentes valeurs du rapport signal/bruit S/B. Le critère d'évaluation est la moyenne de l'erreur de pointage plus trois fois l'écart type $(3\sigma)$. Cette erreur de pointage a été estimée à l'aide d'un grand nombre de tirages de bruit, afin de démontrer l'intérêt de l'invention.

Les résultats obtenus démontrent que l'on peut obtenir une précision de la restitution de pointage en élévation meilleure que 0.05° pour un nombre N d'impulsions $\geq 15$ pour un rapport S/B $\geq 0$ dB, et meilleure que 0.025° pour un nombre N d'impulsions $\geq 15$ pour un rapport S/B $\geq 3$ dB.

Les principes de l'invention ont été décrits en faisant référence à quelques exemples non-limitatifs d'exemples de réalisations. L'étendue de la protection convoitée est définie par les revendications qui suivent.

## Revendications

1.  Méthode de calcul à cadence rapide de restitution dynamique de pointage d'antenne en élévation, notamment pour radar à synthèse d'ouverture monté sur une plate-forme mobile, ladite méthode comportant les opérations suivantes:

    .   générer un signal de référence à partir de la loi théorique d'illumination d'antenne calculée en élévation ;
    .   générer à partir de signaux reçus sur l'antenne, un signal somme $\Sigma$ et un signal différence $\Delta$ ;
    .   numériser ces signaux $\Delta$, $\Sigma$, à l'aide d'une conversion analogique-numérique ;
    .   effectuer une compression d'impulsion reçue en distance, si l'impulsion émise était modulée en fréquence ;
    .   effectuer un sous-échantillonnage de la puissance de chaque signal somme et différence $\Sigma$, $\Delta$ à un pas en degrés inférieur à la précision voulue;
    .   calculer le rapport différence/somme théorique $(\Delta/\Sigma)_T$ à partir dudit signal de référence ;
    .   calculer le rapport différence/somme mesurée $(\Delta/\Sigma)_M$ à partir des signaux reçus, compressés, et sous-échantillonnés ;
    .   comparer le rapport $(\Delta/\Sigma)_M$ au rapport théorique $(\Delta/\Sigma)_T$ pour déterminer l'écart en degré et restituer ainsi le pointage.

2.  Méthode de restitution de pointage selon la revendication 1, **caractérisée en ce que** ledit signal différence $\Delta$ est généré à partir du signal reçu à l'antenne en modifiant la phase et/ou l'amplitude de la loi d'illumination afin de créer un contraste de signal important sur ledit signal différence $\Delta$.

3.  Méthode de restitution de pointage selon la revendication 2, **caractérisée en ce que** ledit signal différence $\Delta$ est généré à partir du signal reçu à l'antenne en inversant la phase du signal $(\pm\pi)$ sur une moitié de la hauteur de l'antenne.

4.  Méthode de restitution de pointage selon la revendication 3, **caractérisée en ce que** ledit signal différence $\Delta$ est obtenue par un coupleur du type T magique disposé avec ses deux entrées raccordées respectivement à une première moitié (100a) et à une deuxième moitié (100b) de la hauteur d'antenne (100), pour fournir la différence $\Delta$ sur une sortie dudit coupleur.

5.  Méthode de restitution de pointage selon l'une quelconque des revendications 1 à 4, **caractérisée en ce qu'**elle comprend en outre les opérations suivantes :

    .   estimation de la puissance de bruit thermique de l'antenne;
    .   soustraction de cette estimation de bruit du signal bruité effectivement reçu.

**6.** Méthode de restitution de pointage selon la revendication 5, **caractérisée en ce que** ledit niveau de puissance de bruit thermique est estimé en effectuant une acquisition au préalable de signal reçu sur le radar sans avoir effectué d'émission.

**7.** Méthode de restitution de pointage selon l'une quelconque des revendications 1 à 6, **caractérisée en ce qu'**elle comprend en outre l'opération suivante :

. mémorisation du signal reçu sur N impulsions afin d'améliorer le rapport signal/bruit des mesures effectuées.

**8.** Méthode de restitution de pointage selon l'une quelconque des revendications 1 à 7, **caractérisée en ce que** le traitement des données correspondant aux signaux somme et différence sous-échantillonnés s'effectue dans le domaine temporel.

**9.** Méthode de restitution de pointage selon l'une quelconque des revendications 1 à 7, **caractérisée en ce que** le traitement des données correspondant aux signaux somme et différence sous-échantillonnés s'effectue dans le domaine fréquentiel.

**10.** Méthode de restitution de pointage selon l'une quelconque des revendications 1 à 9, **caractérisée en ce qu'**elle comprend en outre l'opération suivante :

. à la suite de la restitution de pointage, une commande de correction de pointage d'antenne est générée et appliquée à l'antenne afin de corriger le pointage de celle-ci.

**11.** Méthode de restitution de pointage selon l'une quelconque des revendications 1 à 9, **caractérisée en ce qu'**elle comprend en outre l'opération suivante :

. à la suite de la restitution de pointage, l'écart en degré entre le pointage théorique et le pointage mesuré selon la méthode de l'invention est consigné avec le temps de la mesure, et transmis au sol avec les données radar afin de corriger les calculs de l'image.

**12.** Dispositif de restitution dynamique de pointage en élévation d'antenne radar (101), ladite antenne (101) comprenant une moitié dite haute (101a) et une moitié dite basse (101b) ; ledit dispositif comprenant des moyens pour effectuer la somme $\Sigma$ et la différence $\Delta$ des signaux reçus respectivement par ladite moitié haute (101a) et ladite moitié basse (101b) de ladite antenne (101) ; des moyens de conversion analogique-numérique (ADC1, ADC2) ; des moyens. de compression d'impulsion, (COMP) ; des moyens de mesure de puissance (P) et des moyens d'échantillonnage (SAMP) de la puissance mesurée, **caractérisé en ce que** ledit dispositif comporte en plus des moyens de consigne (M1) d'une relation théorique du rapport $(\Delta /\Sigma)_T$ et le dépointage d'antenne en degré ; et des moyens de calcul ($\mu$P) permettant d'effectuer la comparaison du rapport des signaux reçus $(\Delta /\Sigma)_M$ et théorique $(\Delta /\Sigma)_T$ afin de restituer le pointage en élévation de ladite antenne.

**13.** Dispositif selon la revendication 12, **caractérisé en ce que** ledit dispositif comprend en outre des moyens de consigne (M2) d'une estimation du bruit thermique.

**14.** Dispositif selon l'une quelconque des revendications 11 à 13, **caractérisé en ce que** ledit dispositif comprend des moyens pour mesurer la puissance de bruit reçu par l'antenne en l'absence d'émission préalable, ainsi que des moyens permettant de l'écrire dans ladite consigne M2.

**15.** Dispositif selon l'une quelconque des revendications 11 à 14, **caractérisé en ce que** ledit dispositif comprend en outre deux voies parallèles somme $\Sigma$ et différence $\Delta$ qui peuvent fonctionner simultanément.

**16.** Dispositif selon l'une quelconque des revendications 11 à 14, **caractérisée en ce que** ledit dispositif comprend en outre deux commutateurs (SW1, SW2) permettant le traitement en alternance des signaux somme $\Sigma$ et différence $\Delta$.

**17.** Dispositif selon l'une quelconque des revendications 11 à 16, **caractérisé en ce que** ledit dispositif comprend en outre une mémoire permettant de stocker les données correspondant à un nombre N d'impulsions, et lesdits moyens de calcul ($\mu$P) peuvent moyenner lesdites données de ces N impulsions.

18. Dispositif selon l'une quelconque des revendications 11 à 17, **caractérisé en ce que** ledit dispositif comprend en outre des moyens (ER) permettant d'effectuer une correction de pointage de l'antenne à la suite de la restitution de pointage fournie par les moyens de calcul (µP).

**Patentansprüche**

1. Rechenverfahren mit schneller Wiederholrate zum dynamischen Bestimmen der Elevationsausrichtung einer Antenne, insbesondere für ein auf einem beweglichen Träger montiertes Radar mit synthetischer Apertur, welches Verfahren die folgenden Operationen umfasst:

   Erzeugen eines Referenzsignals ausgehend von der in Elevation berechneten theoretischen Richtcharakteristik einer Antenne;

   aus an der Antenne empfangenen Signalen, Erzeugen eines Summensignals $\Sigma$ und eines Referenzsignals $\Delta$;

   Digitalisieren dieser Signale $\Delta$, $\Sigma$ durch eine Analog-Digitalwandlung;

   Durchführen einer Kompression eines von fern empfangenen Impulses, wenn der gesendete Impuls frequenzmoduliert war;

   Durchführen einer Unterabtastung der Leistung jedes Summen- und Differenzsignals $\Sigma$, $\Delta$ mit einer Schrittweite in Grad unterhalb der gewünschten Genauigkeit;

   Berechnen des theoretischen Differenz/Summenverhältnisses $(\Delta/\Sigma)_T$ anhand des Referenzsignals;

   Berechnen des gemessenen Differenz/Summenverhältnisses $(\Delta/\Sigma)_M$ anhand der empfangenen, komprimierten und unterabgetasteten Signale;

   Vergleichen des Verhältnisses $(\Delta/\Sigma)_M$ mit dem theoretischen Verhältnis $(\Delta/\Sigma)_T$, um die Abweichung in Grad zu bestimmen und so die Ausrichtung zu bestimmen.

2. Verfahren zum Bestimmen der Ausrichtung nach Anspruch 1, **dadurch gekennzeichnet, dass** das Differenzsignal $\Delta$ aus dem an der Antenne empfangenen Signal erzeugt wird, indem die Phase und/oder Amplitude der Richtcharakteristik verändert wird, um einen hohen Signalkontrast an dem Differenzsignal $\Delta$ zu bewirken.

3. Verfahren zum Bestimmen der Ausrichtung nach Anspruch 2, **dadurch gekennzeichnet, dass** das Differenzsignal $\Delta$ aus dem an der Antenne empfangenen Signal durch Umkehren der Phase des Signals ($\pm\pi$) auf einer Hälfte der Höhe der Antenne erzeugt wird.

4. Verfahren zum Bestimmen der Ausrichtung nach Anspruch 3, **dadurch gekennzeichnet, dass** das Differenzsignal $\Delta$ durch einen Koppler vom Typ Magic-T erhalten wird, der mit seinen zwei Eingängen jeweils verbunden mit einer ersten Hälfte (100a) bzw. einer zweiten Hälfte (100b) der Höhe der Antenne (100) angeordnet ist, um die Differenz $\Delta$ an einem Ausgang des Kopplers zu liefern.

5. Verfahren zum Bestimmen der Ausrichtung nach einem beliebigen der Ansprüche 1 bis 4, **dadurch gekennzeichnet, dass** es ferner die folgenden Operationen umfasst:

   Abschätzen der Leistung des thermischen Rauschens der Antenne;

   Abziehen dieser Rauschabschätzung vom effektiv empfangenen verrauschten Signal.

6. Verfahren zum Bestimmen der Ausrichtung nach Anspruch 5, **dadurch gekennzeichnet, dass** der Pegel des thermischen Rauschens abgeschätzt wird durch vorherige Aufnahme eines Empfangssignals am Radar, ohne dass ein Senden durchgeführt worden ist.

7. Verfahren zum Bestimmen der Ausrichtung nach einem beliebigen der Ansprüche 1 bis 6, **dadurch gekennzeichnet, dass** sie ferner die folgende Operation umfasst:

Speichern des für N Impulse erhaltenen Signals, um das Signal-Rausch-Verhältnis der durchgeführten Messungen zu verbessern.

**8.** Verfahren zum Bestimmen der Ausrichtung nach einem beliebigen der Ansprüche 1 bis 7, **dadurch gekennzeichnet, dass** die Verarbeitung der Daten, die den unterabgetasteten Summen- und Differenzsignalen entsprechen, im Zeitbereich stattfindet.

**9.** Verfahren zum Bestimmen der Ausrichtung nach einem beliebigen der Ansprüche 1 bis 7, **dadurch gekennzeichnet, dass** die Verarbeitung der den unterabgetasteten Summen- und Differenzsignalen entsprechenden Daten im Frequenzbereich stattfindet.

**10.** Verfahren zum Bestimmen der Ausrichtung nach einem beliebigen der Ansprüche 1 bis 9, **dadurch gekennzeichnet, dass** es ferner die folgenden Operationen umfasst:

nach dem Bestimmen der Ausrichtung wird ein Befehl zum Korrigieren der Antennenausrichtung erzeugt und auf die Antenne gegeben, um deren Ausrichtung zu korrigieren.

**11.** Verfahren zum Bestimmen der Ausrichtung nach einem beliebigen der Ansprüche 1 bis 9, **dadurch gekennzeichnet, dass** es ferner die folgende Operation umfasst:

nach dem Bestimmen der Ausrichtung wird die Abweichung in Grad zwischen der theoretischen Ausrichtung und der mit dem erfindungsgemäßen Verfahren gemessenen Ausrichtung mit dem Messzeitpunkt verknüpft und an den Boden mit den Radardaten übertragen, um die Bildberechnungen zu korrigieren.

**12.** Vorrichtung zum dynamischen Bestimmen der Elevationsausrichtung einer Radarantenne (101), wobei die Antenne (101) eine sogenannte obere Hälfte (101a) und eine sogenannte untere Hälfte (101b) umfasst, die Vorrichtung Mittel zum Bilden der Summe $\Sigma$ und der Differenz $\Delta$ der für die obere Hälfte (101a) bzw. die untere Hälfte (101b) der Antenne (101) empfangenen Signale, Mittel zur Analog-Digitalwandlung (ADC1, ADC2), Mittel zur Impulskompression (COMP), Mittel zur Leistungsmessung (P) und Mittel zum Abtasten (SAMP) der gemessenen Leistung umfasst, **dadurch gekennzeichnet, dass** sie ferner umfasst: Mittel zum Einstellen (M1) einer theoretischen Beziehung des Verhältnisses $(\Delta/\Sigma)_T$ und der Antennenfehlausrichtung in Grad sowie Rechenmittel ($\mu$P), mit denen der Vergleich des Verhältnisses der empfangenen Signale $(\Delta/\Sigma)_M$ und des theoretischen Verhältnisses $(\Delta/\Sigma)_T$ durchgeführt werden kann, um die Relevationsausrichtung der Antenne zu bestimmen.

**13.** Vorrichtung nach Anspruch 12, **dadurch gekennzeichnet, dass** die Vorrichtung ferner Mittel zum Einstellen (M2) einer Abschätzung des thermischen Rauschens umfasst.

**14.** Vorrichtung nach einem beliebigen der Ansprüche 11 bis 13, **dadurch gekennzeichnet, dass** die Vorrichtung Mittel zum Messen der Leistung des von der Antenne empfangenen Rauschens bei Fehlen eines vorherigen Sendens sowie Mittel umfasst, die es erlauben, sie in den Einstellwert M2 einzutragen.

**15.** Vorrichtung nach einem beliebigen der Ansprüche 11 bis 14, **dadurch gekennzeichnet, dass** die Vorrichtung ferner zwei parallele Summen- und Differenzkanäle $\Sigma$ bzw. $\Delta$ umfasst, die gleichzeitig arbeiten können.

**16.** Vorrichtung nach einem beliebigen der Ansprüche 11 bis 14, **dadurch gekennzeichnet, dass** die Vorrichtung ferner zwei Umschalter (SW1, SW2) umfasst, die die abwechselnde Verarbeitung des Summensignals $\Sigma$ und des Differenzsignals $\Delta$ erlauben.

**17.** Vorrichtung nach einem beliebigen der Ansprüche 11 bis 16, **dadurch gekennzeichnet, dass** die Vorrichtung ferner einen Speicher zum Speichern der einer Anzahl N von Impulsen entsprechenden Daten umfasst, und dass die Rechenmittel ($\mu$P) die Daten dieser N Impulse mitteln können.

**18.** Vorrichtung nach einem beliebigen der Ansprüche 11 bis 17, **dadurch gekennzeichnet, dass** die Vorrichtung ferner Mittel (ER) umfassen, die die Durchführung einer Ausrichtungskorrektur anhand der von den Rechenmitteln ($\mu$P) gelieferten Ausrichtungsbestimmung ermöglichen.

**Claims**

1.  A computation method for fast repetition rate dynamic antenna elevation pointing measurement, in particular for synthetic aperture radar mounted on a mobile platform, said method including the following operations:

    .   generating a reference signal from a calculated theoretical law of antenna illumination in elevation;
    .   generating a sum signal $\Sigma$ and a difference signal $\Delta$ from signals received at the antenna;
    .   digitizing said signals $\Delta$, $\Sigma$ by analogue-to-digital conversion;
    .   compressing a remotely received pulse if the pulse transmitted was frequency modulated;
    .   undersampling the power of each sum and difference signal $\Sigma$, $\Delta$ one step lower than the required accuracy;
    .   computing the theoretical difference/sum ratio $(\Delta/\Sigma)_T$ from said reference signal;
    .   computing the measured difference/sum ratio $(\Delta/\Sigma)_M$ from the received, compressed and undersampled signals; and
    .   comparing the measured ratio $(\Delta/\Sigma)_M$ to the theoretical ratio $(\Delta/\Sigma)_T$ to determine the error in degrees and thereby measure the pointing.

2.  A pointing measurement method according to claim 1, **characterized in that** said difference signal $\Delta$ is generated from the signal received at the antenna by modifying the phase and/or the amplitude of the illumination law in order to create a high signal contrast in said difference signal $\Delta$.

3.  A pointing measurement method according to claim 2, **characterized in that** said difference signal $\Delta$ is generated from the signal received at the antenna by inverting the phase of the signal $(+\pi)$ over one half of the height of the antenna.

4.  A pointing measurement method according to claim 3, **characterized in that** said difference signal $\Delta$ is obtained by a magic T coupler with two inputs respectively connected to a first half (100a) and a second half (100b) of the antenna height (100) to supply the difference signal $\Delta$ at an output of said coupler.

5.  A pointing measurement method according to any one of claims 1 to 4, **characterized in that** it further includes the following operations:

    .   estimating the thermal noise power of the antenna; and
    .   subtracting said noise estimate from the noisy signal actually received.

6.  A pointing measurement method according to claim 5, **characterized in that** said thermal noise power level is estimated by acquiring beforehand a signal received by the radar without the radar having effected any transmission.

7.  A pointing measurement method according to any one of claims 1 to 6, **characterized in that** it further includes memorizing the received signal over N pulses to improve the signal-to-noise ratio of the measurements effected.

8.  A pointing measurement method according to any one of claims 1 to 7, **characterized in that** data corresponding to the undersampled sum and difference signals is processed in the time domain.

9.  A pointing measurement method according to any one of claims 1 to 7, **characterized in that** data corresponding to the undersampled sum and difference signals is processed in the frequency domain.

10. A pointing measurement method according to any one of claims 1 to 9, **characterized in that**, after measurement of pointing, an antenna pointing correction command is generated and applied to the antenna in order to correct the pointing thereof.

11. A pointing measurement method according to any one of claims 1 to 9, **characterized in that**, after measurement of pointing, the error in degrees between the theoretical pointing and the pointing measured by the method of the invention is stored with the time of the measurement and transmitted to the ground with the radar data in order to correct the image computations.

12. A system for dynamically measuring the elevation pointing of a radar antenna (101), said antenna (101) having a top half (101a) and a bottom half (101b), and said system including means for effecting the sum $\Sigma$ and the difference

$\Delta$ of the signals respectively received by said top half (101a) and said bottom half (101b) of said antenna (101), analogue-to-digital converter means (ADC1, ADC2), pulse compressor means (COMP), power measuring means (P), and sampling means (SAMP) for sampling the measured power, **characterized in that** said system further includes storage means (M1) for storing a theoretical relationship of the ratio $(\Delta/\Sigma)_T$ and the antenna depointing in degrees and computing means ($\mu$P) for comparing the difference/sum ratio $(\Delta/\Sigma)_M$ of the signals received and measured and the theoretical ratio $(\Delta/\Sigma)_T$ to measure the elevation pointing of said antenna.

13. A system according to claim 12, **characterized in that** it further includes storage means (M2) for storing a thermal noise estimate.

14. A system according to any one of claims 11 to 13, **characterized in that** it includes means for measuring the noise power received by the antenna in the absence of any previous transmission and means for writing it in the storage means (M2).

15. A system according to any one of claims 11 to 14, **characterized in that** it further includes two parallel channels which can operate simultaneously, namely a sum channel $\Sigma$ and a difference channel $\Delta$.

16. A system according to any one of claims 11 to 14, **characterized in that** it further includes two switches (SW1, SW2) for alternately processing a sum signal $\Sigma$ and a difference signal $\Delta$.

17. A system according to any one of claims 11 to 16, **characterized in that** it further includes a memory for storing the data corresponding to a number N of pulses and said computing means ($\mu$P) can average said data over said N pulses.

18. A system according to any one of claims 11 to 17, **characterized in that** it further includes means (ER) for effecting an antenna pointing correction after measurement of pointing by the computing means ($\mu$P).

# FIG.1

# FIG.2

# FIG.3

# FIG.4

EP 0 716 318 B1

FIG.5

FIG.6

FIG.7

ER△(°)

0dB

3dB

6dB

15dB